(19) **Europäisches Patentamt / European Patent Office / Office européen des brevets**

(11) **EP 4 334 247 B1**

(12) **EUROPEAN PATENT SPECIFICATION**

(45) Date of publication and mention
of the grant of the patent:
**24.06.2026 Bulletin 2026/26**

(21) Application number: **22727876.9**

(22) Date of filing: **05.05.2022**

(51) International Patent Classification (IPC):
**C01B 21/20** (2006.01)    **B01J 19/08** (2006.01)
**H05H 1/46** (2006.01)    **H05H 1/48** (2006.01)
**H05H 1/52** (2006.01)

(52) Cooperative Patent Classification (CPC):
**H05H 1/52; B01J 19/088; C01B 21/203;**
**H05H 1/48;** B01J 2219/0869; B01J 2219/0883;
H05H 1/461; H05H 1/482; H05H 2245/10

(86) International application number:
**PCT/EP2022/062199**

(87) International publication number:
**WO 2022/234039 (10.11.2022 Gazette 2022/45)**

(54) **PLASMA REACTOR FOR PLASMA-BASED GAS CONVERSION COMPRISING AN EFFUSION NOZZLE**

PLASMAREAKTOR ZUR PLASMAGESTÜTZTEN GASUMWANDLUNG MIT EINER EFFUSIONSDÜSE

RÉACTEUR À PLASMA POUR UNE CONVERSION DE GAZ À BASE DE PLASMA COMPRENANT UNE BUSE D'EFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.05.2021 EP 21172664**

(43) Date of publication of application:
**13.03.2024 Bulletin 2024/11**

(73) Proprietor: **Universiteit Antwerpen**
**2000 Antwerpen (BE)**

(72) Inventors:
• **CREEL, James**
**Conroe, Texas 77385 (US)**
• **AHMADI ESHTEHARDI, Hamid**
**2610 Antwerp (BE)**
• **BOGAERTS, Annemie**
**2160 Wommelgem (BE)**

(74) Representative: **Oryon NV**
**Tavernierkaai 2**
**2000 Antwerp (BE)**

(56) References cited:
**WO-A1-2020/115473**    **US-A- 3 042 830**
**US-A1- 2004 168 905**

## Description

## Field of the disclosure

The present invention relates to a plasma reactor for plasma-based gas conversion comprising a plasma chamber wherein, when in operation, a plasma is formed. The plasma chamber comprises one or more gas inlets for introducing a feed gas into the plasma chamber and at least one gas outlet opening for evacuating converted and unconverted feed gas from the plasma chamber.

## Background

Plasma reactors for plasma-based gas conversion are gaining an increased interest for a variety of chemical reaction applications.

A first example of the potential benefit of using plasma reactors is for the conversion of carbon dioxide and methane into value added chemicals or renewable fuels.

A second example of growing interest in using plasma reactors is for the conversion of $N_2$ and $O_2$ from air into reactive NO and $NO_2$, generally named $NO_x$.

A plasma reactor for $NO_x$ production is for example disclosed by Jardali et al. in Green Chem, 2021, 23, 1748-1757. Jardali et al. proposes to use the $NO_x$ molecules for the production of high yield nitrogen content organic fertilizers. Indeed, by mixing $NO_2$ with livestock manure, a nitrate is formed that stabilizes the ammonium and hence minimizes or eliminates $NH_3$ losses. On the other hand, present fertilizers are mainly produced from non-sustainable fossil fuels via the Haber-Bosch process which leads to serious environmental problems, involving for example, large carbon dioxide production. Hence, production of fertilizers based on the plasma technology can be an environmentally friendly alternative or a complementary solution to the present fertilizers production methods.

Different types of plasma reactors exist for the purpose of plasma-assisted gas conversion. Plasma reactors can differ in design, geometry, and/or mode of operation, depending on the particular application for which the plasma reactor is used.

An example of a plasma reactor for $NO_x$ production is a rotating gliding arc (RGA) reactor, as discussed by Jardali et al. The RGA reactor comprises a plasma chamber wherein a plasma is to be formed and one or more gas inlets for supplying the feed gas into the plasma chamber. In this example the feed gas is $N_2$ and $O_2$. The feed gas is introduced in the plasma chamber of the RGA reactor as a swirling flow about a central axis of the reactor. The RGA reactor further has a cathode in the form of a spark plug (with ground electrode removed), an anode having a conical portion, and a cylindrical outlet portion for evacuating the converted gases ($NO_x$) and non-converted gases ($N_2$ and $O_2$). By applying a high-voltage between the first and second electrode, a gliding arc discharge is generated in the plasma chamber.

Although the results of Jardali et al. show to be promising for $NO_x$ production, in order for the plasma reactor technology to become commercially attractive for large scale applications, further improvements are still desirable. What is important is to obtain a high production yield of $NO_x$ with a low energy consumption. The energy consumption is also named energy cost and is generally expressed in Joules per mol of feed gas.

Similarly, if plasma reactor technology is to be commercially deployed for other plasma-based gas conversion applications, such as $CO_2$ or $CH_4$ conversion, increasing production yield and minimizing the energy cost is vital.

Hence there is room for improving plasma reactors for gas conversion.

In US2004/168905A1, on which the two-part-form of claim 1 is based, NOx is generated by means of a plasma-enhanced method which, with the addition of H2-containing gas, reduces NOx to NH3 and uses the thus obtained NH3 as the reducing agent for an SCR catalyst for exhaust emission control. A plasma reactor is provided in the corresponding apparatus for performing the method.

US3042830A discloses a gas ionizing apparatus comprising a body forming a chamber, a first electrode within the chamber, a second tubular electrode in the body having an internal gas mixing passage and arc gap spacing from the first electrode beyond the inlet end of the passage so that the arc enters the second electrode, means for admitting to the chamber a first gas to be heated in the gap and discharged through the passage, means for feeding a second coolant gas into a space about the second electrode and in contact therewith, and means for passing the preheated coolant gas then into the heated gas stream within the arc extent inside the second electrode.

WO2020/115473A1 discloses a method and apparatus for the manufacture of nitric oxide and/or nitrogen dioxide in which a plasma is formed from nitrogen and oxygen passed through gas inlets into a reaction chamber to create a vorticular flow in the reaction chamber. A source of microwave energy is used to energise the nitrogen and oxygen in a microwave transparent inner plasma containment cylinder to create the plasma.

## Summary

It is an object of the present invention to provide a plasma reactor for plasma-based gas conversion according to claim 1, wherein the production yield is increased and/or energy cost is reduced when compared to prior art arc plasma reactors.

The present invention is defined in the appended independent claim. The dependent claims define advantageous embodiments.

According to the invention, a plasma reactor for plasma-based gas conversion is provided. The plasma reactor comprises a plasma chamber having one or more gas inlets configured for introducing a feed gas into the plasma chamber, a first electrode (31) and a second electrode (32) for generating a gas discharge in the plasma chamber, and at least one gas outlet opening for evacuating converted and unconverted feed gas from the plasma chamber. A central axis of the plasma reactor is passing through the at least one gas outlet opening of the plasma chamber.

The plasma reactor comprises an effusion nozzle coupled to the plasma chamber and wherein the effusion nozzle is made of or at least partly is made of an electrically conducting material.

The effusion nozzle comprises a radial circumferential wall radially delimiting a gas-receiving cavity elongating along the central axis from a first end to a second end, an axial entrance opening at the first end of the gas-receiving cavity for receiving converted and unconverted feed gas exiting the at least one gas outlet opening of the plasma chamber, and an axial wall at the second end of the gas-receiving cavity axially delimiting the gas receiving cavity at the second end of the gas receiving cavity.

The effusion nozzle further comprises one or more effusion openings configured for evacuating converted and unconverted feed gas from the gas-receiving cavity.

The effusion nozzle is forming an extension of the second electrode or alternatively, the effusion nozzle or part of the effusion nozzle is forming the second electrode.

Hence, in embodiments wherein the effusion nozzle is an electrode extension, the second electrode comprises the effusion nozzle, i.e., the effusion nozzle is part of the second electrode. In other embodiments wherein the effusion nozzle is forming the second electrode, the effusion nozzle corresponds to or is the second electrode.

The present invention is characterized in that the axial wall or at least a central portion of the axial wall is forming an electrode tip of the second electrode. By providing an effusion nozzle comprising an axial wall, the axial wall will block the axial flow of converted and unconverted gas flowing out of the reactor chamber and thereby force the gas to recirculate within the gas-receiving cavity. In this way, the overall residence time of the gas in the plasma reactor is increased. An increased residence time is positively influencing gas conversion production yields.

By providing an effusion nozzle comprising an axial wall forcing the gas to recirculate, heat is trapped inside the nozzle which increases temperature of the walls of the effusion nozzle and/or plasma chamber. As a consequence, conversion by thermal chemical reactions is enhanced, which positively influences gas conversion production yields.

The axial wall can be construed as an axial blind flange.

The axial wall can have different shapes, for instance the shape is not limited to a flat-shaped wall or a wall with uniform thickness. In embodiments, the axial wall can have a non-uniform thickness.

In embodiments, the axial wall comprises a protruding element protruding inside the gas-receiving cavity. This protruding element can take a number of different shapes such as any of the following non-limiting list of shapes: a cone, a cylinder, a hemisphere, a cuboid, a frustum, a pyramid, a prism, a cross, a helix shape, or any combination thereof.

In some embodiments, the protruding element is protruding inside the gas-receiving cavity in a direction parallel with the central axis.

In embodiments, the effusion openings are, for example, effusion holes or effusion slits.

In embodiments, the effusion nozzle is removably coupled to the plasma reactor. Indeed, with the plasma reactor according to the present invention, a centralized plasma discharge is formed between the first electrode and the blocking wall of the effusion nozzle, acting as the second electrode, hence, any corrosion and/or hot spot in the contact point of the plasma and the surface will occur in the body of the effusion nozzle. By having a removeable effusion nozzle, the effusion nozzle can be replaced, which is a simpler and cheaper device to be manufactured. In this way, the service time of the reactor body is maximized.

In embodiments, the plasma reactor according to the present invention is of a type of any of the following plasma reactor types a rotating gliding arc plasma reactor, a dual vortex plasmatron, a gliding arc plasmatron, or an atmospheric pressure glow discharge plasma reactor.

In embodiments, the plasma reactor is a rotating gliding arc plasma reactor operable in a rotating arc mode and operable in a steady arc mode.

In embodiments, the plasma reactor according to the present invention is a plasma reactor operable in a pressure range in the plasma chamber between 1 mbar and 5 bar, preferably between 100 mbar and 5 bar, more preferably between 500 mbar and 2 bar.

In embodiments, the effusion nozzle is made of an electrically conducting material and the effusion nozzle is electrically coupled to an electrode of the plasma reactor.

In embodiments, the effusion nozzle is electrically coupled to the second electrode so as to form an extension of the second electrode, preferably, the first electrode is high-voltage cathode electrode and the second electrode is a grounded anode electrode.

The plasma reactor of the present invention may be used for conversion of $N_2$ and $O_2$ molecules into NO and $NO_2$ molecules, or for conversion of $CO_2$ molecules into value added chemicals or renewable fuels.

## Short description of the drawings

These and further aspects will be explained in greater detail by way of example and with reference to the accompanying drawings in which:

Fig.1a to Fig.1c　schematically illustrates parts of a plasma reactor,

Fig.2a to Fig.2f　represent cross-sectional views of examples of embodiments of effusion nozzles,

Fig.3　illustrates a section view of a first example of an embodiment of a threaded effusion nozzle,

Fig.4　illustrates a section view of a second example of an embodiment of a threaded effusion nozzle,

Fig.5　illustrates a section view of a third example of an embodiment of a threaded effusion nozzle,

Fig.6a　represents a section view of an embodiment of an effusion nozzle according to the present disclosure, illustrating radially distributed effusion openings through a radial circumferential wall of the effusion nozzle,

Fig.6b　represents a section view of a further embodiment of an effusion nozzle according to the present disclosure, illustrating tangential effusion openings through a radial circumferential wall of the effusion nozzle,

Fig.7a and Fig.7b　are illustrating respectively an outer side and an inner side of an embodiment of an effusion nozzle according to the present disclosure wherein radially distributed effusion openings are made through the axial wall,

Fig.8　schematically illustrates a cross-sectional view of an example of an embodiment of a rotating gliding arc plasma reactor,

Fig.9　schematically illustrates a cross-sectional view of a further example of an embodiment of a rotating gliding arc plasma reactor,

Fig.10　shows an isometric view of an embodiment of a rotating gliding arc plasma reactor,

Fig.11　shows an isometric view of a portion of the effusion nozzle of the gliding arc plasma reactor shown on Fig.10,

Fig.12　is a cross-sectional view schematically illustrating an example of an embodiment of a 3D gliding arc plasmatron comprising an effusion nozzle,

Fig.13　is a cross-sectional view schematically illustrating a dual vortex plasmatron comprising an effusion nozzle,

Fig.14　is a cross-sectional view schematically illustrating an atmospheric pressure glow discharge reactor comprising an effusion nozzle,

Fig.15　illustrates $NO_x$ concentrations as function of $N_2$ fraction obtained with an RGA plasma reactor with and without effusion nozzle,

Fig.16　illustrates the energy cost as function of $N_2$ fraction obtained with an RGA plasma reactor with and without effusion nozzle.

The drawings of the figures are neither drawn to scale nor proportioned. Generally, identical components are denoted by the same reference numerals in the figures.

## Detailed description of embodiments

The present invention will be described in terms of specific embodiments, which are illustrative and not to be construed as limiting. It will be appreciated by persons skilled in the art that the present invention is not limited by what has been particularly shown and/or described and that alternatives or modified embodiments could be developed in the light of the overall teaching of this disclosure. The drawings described are only schematic and are non-limiting.

### _Plasma reactor with effusion nozzle, general_

Various types of plasma reactors for performing plasma-based gas conversion exist in the art and the present invention is related to plasma reactors wherein an arc discharge is generated between two electrodes in order to create a gas discharge plasma. Examples of different types of prior art plasma reactors for gas conversion are for example disclosed by Bogaerts and Centi in "Plasma technology for CO2 conversion: A personal perspective on prospects and gaps." Front. Energy Res., 8, 111 (2020).

The plasma reactors according to the present invention are also named atmospheric pressure plasma reactors as they typically operate in a pressure range between a few mbar to one bar and above. In its simplest form, a gas discharge plasma is created by applying an electric potential difference between two electrodes, positioned in a gas, further named feed gas. The potential difference can in principle be direct current (DC), alternating current (AC), ranging from 50 Hz to MHz (radio-frequency; RF), or pulsed. Embodiments of different types of plasma reactors are further discussed below in more detail.

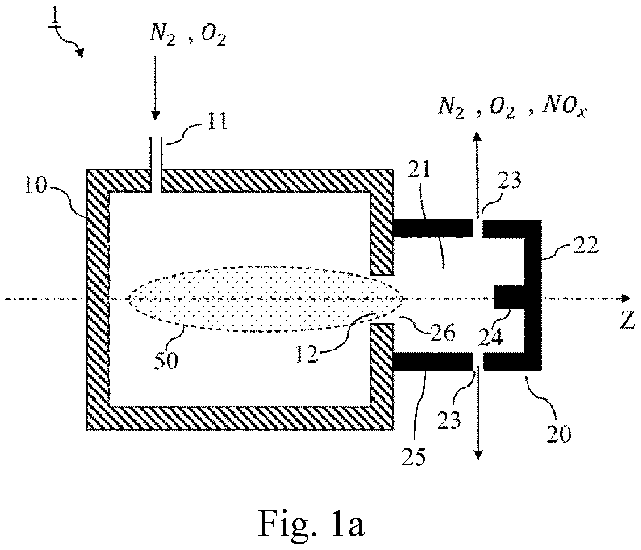

What the various types of plasma reactors 1 for gas conversion have in common is that they comprise a plasma chamber 10 wherein, when the plasma reactor 1 is in operation, a plasma 50 is formed, as schematically illustrated on Fig.1a to Fig.1c where cross-sectional views of plasma reactors are shown.

Typically, the plasma chamber 10 of the plasma reactor 1 comprises one or more gas inlets 11 configured for introducing a feed gas into the plasma chamber 10, and at least one gas outlet opening 12 for evacuating converted and unconverted feed gas from the plasma chamber 10. On Fig.1a to Fig.1c, a black arrow at the gas inlet 11 schematically indicates a direction of inflow of feed gas in the plasma chamber and further black arrows at the effusion openings 23 of the effusion nozzle 20 schematically indicate a direction of outflow of converted and unconverted feed gas out of the effusion nozzle 20. Remark that not all components of the plasma reactor for gas conversion are shown on Fig.1a to Fig.1c, for example the electrical power means for generating the plasma is not shown, and these components are further discussed below when detailed embodiments of various types of plasma reactors are discussed.

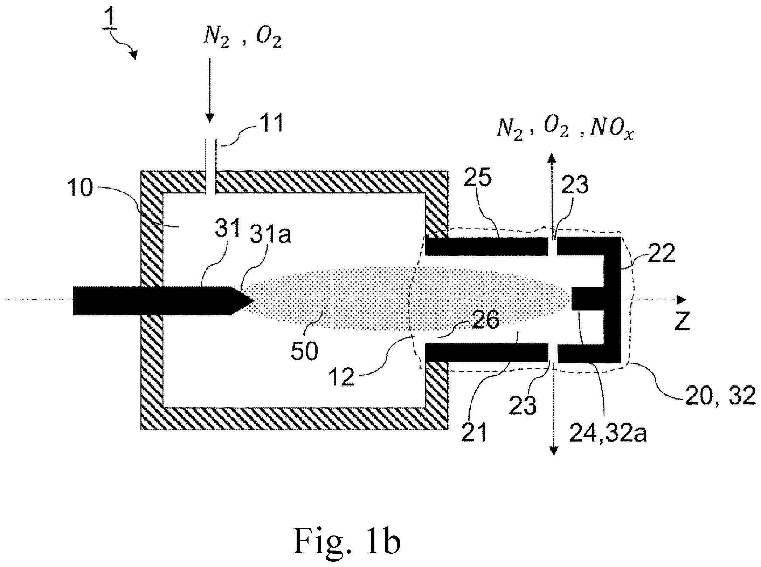

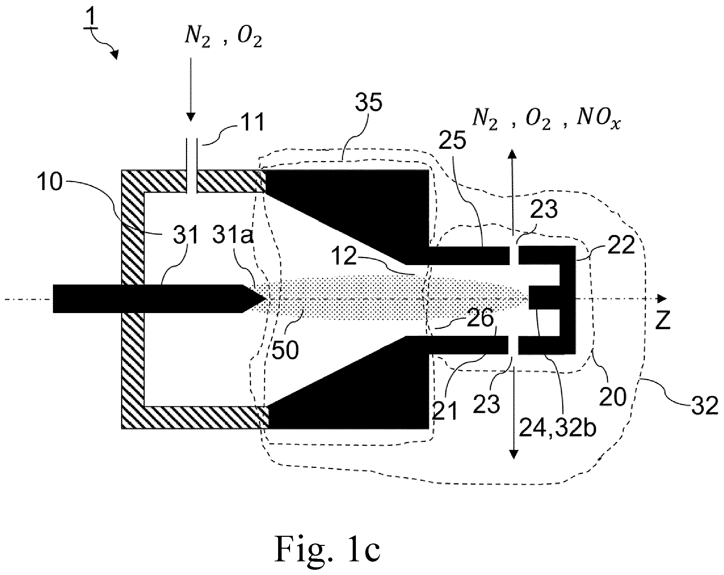

The plasma reactor 1 comprises a central axis Z passing through the gas outlet opening 12 of plasma chamber 10, as illustrated on Fig.1. The gas outlet opening has to be construed as an orifice. The wording passing through has to be construed as crossing or traversing. In embodiments wherein the gas outlet opening 12 has a circular shape, typically, the central axis Z is centrally passing through the gas outlet opening.

In embodiments, the gas outlet opening 12 of the plasma chamber, comprises an outlet surface that is transverse or orthogonal with respect to the central axis Z.

The plasma reactor comprises an effusion nozzle 20 that is coupled to the plasma chamber 10, as schematically illustrated on Fig.1a to Fig.1c. The effusion nozzle 20 comprises a gas-receiving cavity 21 extending along the central axis Z of the plasma chamber from a first end to a second end.

The gas-receiving cavity is configured for receiving a gas flow of converted and unconverted feed gas exiting through the at least one gas outlet opening 12 of the plasma chamber. For instance, the gas-receiving cavity 21 comprises an axial entrance opening 26 at the first end that is configured for receiving this gas flow of converted and unconverted feed gas exiting the plasma chamber. An axial entrance opening 26 has to be construed as an opening that is transverse with respect to the central axis Z.

As illustrated for example on Fig.1a to Fig.1c, a radial circumferential wall 25 is radially delimiting the gas-receiving cavity that is elongating along the central axis Z.

In embodiments, the axial entrance opening of the effusion nozzle comprises an entrance surface that is transverse or orthogonal with respect to the central axis Z.

The gas-receiving cavity 21 further comprises an axial wall 22 at the second end of the gas-receiving cavity. The axial wall 22 will block the gas flow, in a direction essentially parallel with the central axis Z, of converted and unconverted feed gas exiting the plasma chamber 10 as the gas will hit the axial wall and be forced to change direction, and hence recirculate within the gas-receiving cavity 21.

In other words, the axial wall 22 prohibits the gas flow to proceed flowing in its forward direction along the central axis Z and hence the axial wall 22 forces the gas flow to change its flow direction, i.e. rerouting the gas flow.

In embodiments, the axial wall is an axial blind flange that is transverse with respect to the central axis Z.

In embodiments, as schematically illustrated on Fig.1a to Fig.1c, the central axis Z of the plasma reactor is crossing an axial wall portion of the axial wall 22.

Typically, the overall direction of the gas flow exiting the plasma chamber and entering the gas-receiving cavity of the effusion nozzle is in a direction parallel with central axis Z.

In other words, the effusion nozzle assures that the gas flow out of the plasma chamber is blocked in its forward direction as gas molecules bounce against the axial wall 22. In this way, the gas molecules start to recirculate within the gas-receiving cavity 21.

When using the effusion nozzle, for a same gas flow rate of feed gas, the pressure inside the plasma chamber will generally increase and the time the feed gas stays in the reactor before being evacuated is increased, thereby increasing the production yield.

Further, the recirculation of the gas in the receiving-cavity contributes to improve the heat transfer to the walls of the effusion nozzle and an increased temperature can positively influence the production yield as further outlined below.

Indeed, with the effusion nozzle according to the present disclosure, heat escaping from the reactor is reduced and the effusion nozzle retains some of the heat from the plasma. The turbulent mixing allows for a better heat transfer to the walls compared to for example a laminar flow because with turbulent flow a better mixing is obtained. A laminar flow tends to shield the heat more.

The production yield can be further increased due to an effect known as "wall-stabilization" of the plasma, where the temperature gradient of the plasma column becomes less steep as the heat transfer towards the walls increases. This leads to a more stable, less contracted plasma column (or arc), which improves the conversion.

The axial wall 22 can have various shapes and hence the axial wall is not necessarily a flat wall or a wall having a homogenous thickness. Hence, the axial wall has to be construed as any wall that is suitable to prohibit the gas flow to proceed flowing in its forward direction along the central axis Z and hence forcing the gas flow to change its flow direction, i.e., rerouting the gas flow.

In embodiments, the axial wall 22 comprises a protruding element 24 protruding inside the gas-receiving cavity 21 in a direction parallel with the central axis Z. The axially protruding element 24 separates the gas flow, i.e., the gas flow is forced to flow around the protruding element 24 and hence the protruding element could further contribute to forcing the recirculation of the gas inside the gas-receiving cavity. In other words, the axially protruding element 24 disperses the gas inside the gas-receiving cavity.

In embodiments, the central axis Z of the plasma reactor 1 is crossing the protruding element 24. Detailed embodiments of the protruding element will be discussed in the section below where specific examples of effusion nozzles are given.

With reference to Fig.1a to Fig.1c, a first electrode 31 and a second electrode 32 are provided for generating an arc discharge between the first and second electrode and hence create a gas discharge plasma. The second electrode is electrically insulated from the first electrode, e.g., with a ceramic insulator.

In embodiments, the first electrode is a high-voltage electrode and the second electrode is a grounded electrode, preferably the first electrode is a cathode and the second electrode is an anode.

In other embodiments, the second electrode is a high-voltage electrode, e.g., a cathode, and the first electrode is grounded electrode, e.g., an anode.

As for example illustrated on Fig.1c, the effusion nozzle 20 is forming an extension, i.e., an electrode extension, of the second electrode 32. In other words, the effusion nozzle 20 is a part of the second electrode 32.

Hence, for embodiments wherein the effusion nozzle is forming an electrode extension, as illustrated on Fig.1c, the second electrode 32 comprises two electrode parts: a first electrode part 35 and a second electrode part 20. The first electrode part 35 is at least partly formed by a wall portion of the plasma chamber 10. A wall opening made through this wall portion of the plasma chamber is forming the gas outlet opening 12 of the plasma chamber 10. The second electrode part is formed by the effusion nozzle 22, i.e., the second electrode part corresponds to the effusion nozzle 22. On Fig.1c, the second electrode 32, the first electrode part 35 and the effusion nozzle 20 that is forming the second electrode part are encircled with a dotted line. In these embodiments, the first electrode part and the second electrode part, i.e., the effusion nozzle are electrically coupled. The coupling between the first and second electrode part can be done for example by welding or the coupling can be a screwed coupling such that the effusion nozzle can be replaced when needed.

In embodiments, as illustrated on Fig.1c, the wall portion of the plasma chamber 10 that at least partly is forming the first electrode part 35 of the second electrode 32 is a conical portion, more specifically a conical wall portion having a shape of a truncated hollow cone elongating along the central axis Z.

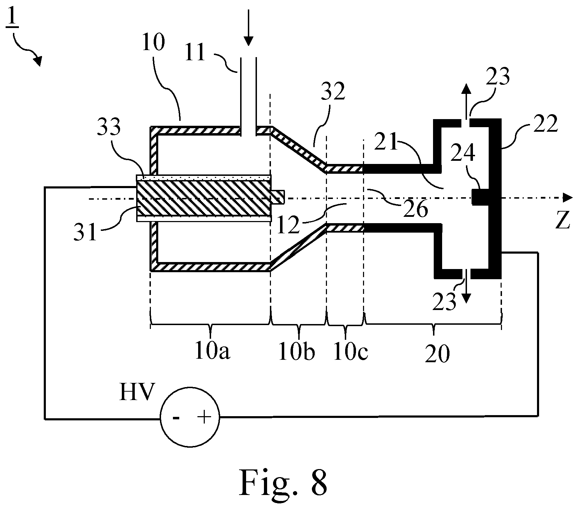

In other embodiments, wherein the second electrode comprises a first part and a second part, the entire plasma chamber, i.e., the walls delimiting the plasma chamber, forms the first part of the second electrode and the effusion nozzle forms the second part of the second electrode. An example of such an embodiment is for example shown on Fig.8 wherein the walls delimiting the plasma chamber are part of the second electrode.

In other embodiments, as illustrated for example on Fig.1a and Fig.1b, the effusion nozzle 20 is forming the second electrode 32, i.e., the effusion nozzle corresponds to or is the second electrode 32. In other embodiments, parts of the effusion nozzle are forming the second electrode 32.

In embodiments, at least the radial circumferential wall 25 and the axial wall 22 of the effusion nozzle are forming part of the second electrode 32.

Hence, as the effusion nozzle is part of the electrode, the effusion nozzle 20 is made of or at least partly made of an electrically conducting material, e.g., stainless steel.

In embodiments, at least the radial circumferential wall 25 and the axial wall 22 are made of an electrically conducting material. In other embodiments, at least the axial wall, or at least the protruding element of the axial wall are made of an electrically conducting material.

With reference to Fig.1a to Fig.1c, the central axis Z is crossing the first electrode 31. For example, the first electrode can be a pin electrode elongating along the central axis Z.

In embodiments, as shown on Fig.1b and Fig.1c, the first electrode 31 comprises an electrode tip 31a, and the electrode 31 or at least the electrode tip 31a is located within the plasma chamber 10.

In embodiments, as shown on Fig.1b and Fig.1c, the central axis Z is crossing the electrode tip 31a of the first electrode 31.

Plasma reactors according to the present invention comprising an effusion nozzle and wherein the effusion nozzle 20 is forming part of the second electrode 32 or wherein the effusion nozzle is the second electrode, have a major effect on the operation and performances of the plasma reactor. Indeed, when the plasma reactor 1 is in operation, the arc discharge is elongated and due to the axial wall 22 of the effusion nozzle, a central steady arc discharge can be created through the gas-receiving cavity of the effusion nozzle.

Indeed, according to the invention, the axial wall or at least a central portion of the axial wall forms an electrode tip for the second electrode, allowing to create a central arc discharge through the gas-receiving cavity of the effusion nozzle. The arc can hereby be sustained at a lower power and gas production yield can be increased at a lower cost.

The effusion nozzle 20 further comprises one or more effusion openings 23, such as for example effusion holes or effusion slits, for evacuating converted and unconverted feed gas from the gas-receiving cavity 21.

The coupling of the effusion nozzle to the plasma chamber can be performed by various coupling means, known to the skilled person, such as but not limited to welding, soldering or screwing. The coupling is made in such a way that no gas or only an insignificant amount of gas could escape through the coupling interface.

*Examples of effusion nozzles*

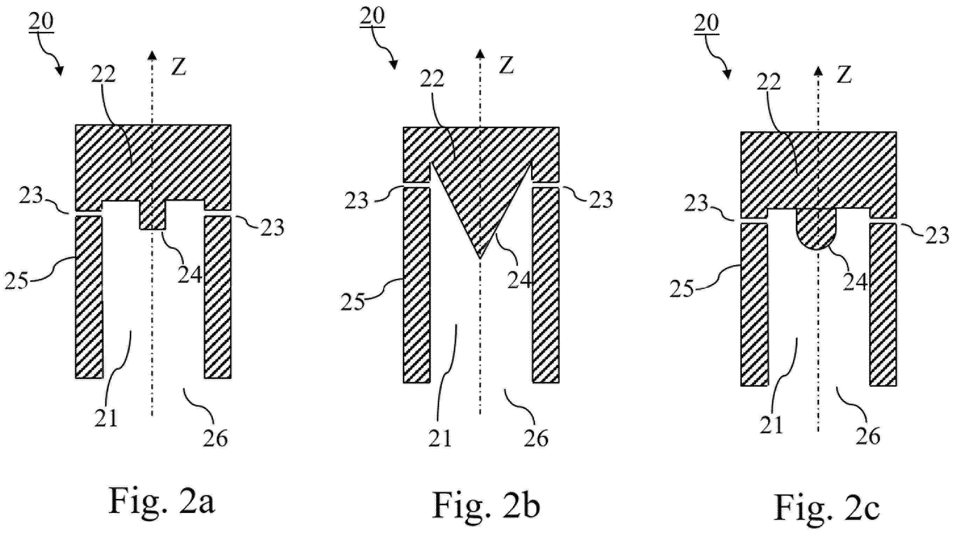

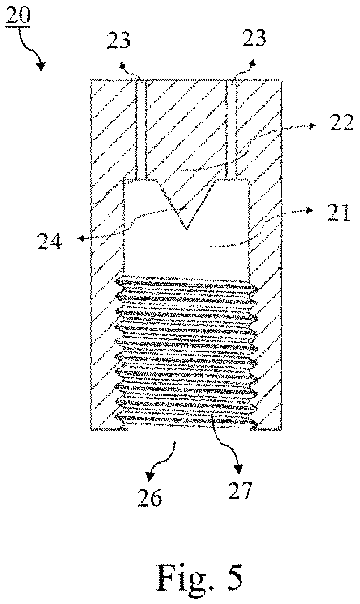

In Fig.2a to Fig.2f and Fig.3 to Fig.5, examples of embodiments of an effusion nozzle are schematically shown. As illustrated on these embodiments, the gas-receiving cavity 21 is extending along the central axis Z from an axial entrance opening 26 at a first end of the gas-receiving cavity to the axial wall 22 at a second end of the gas-receiving cavity, opposite the first end. The gas-receiving cavity 21 receives the gas flow of converted and unconverted feed gas through the axial entrance opening 26.

In embodiments, the effusion nozzle can be manufactured as a single piece, e.g., mechanically manufactured as a single metal piece that is attachable to the plasma chamber.

In other embodiments the effusion nozzle can be composed of multiple pieces or sections that are attached to each other. In embodiments, the effusion nozzle is for example composed of two pieces that are attached to each other. For example, a first separate section of the effusion nozzle can be formed by a circumferential wall 25 radially delimiting the gas-receiving cavity 21 and a second separate section can be formed by an axial flange forming the axial wall 22. The second section can then be attached to the first section by welding, screwing or any other suitable coupling means such that no or only an insignificant amount of gas could escape through the coupling interface.

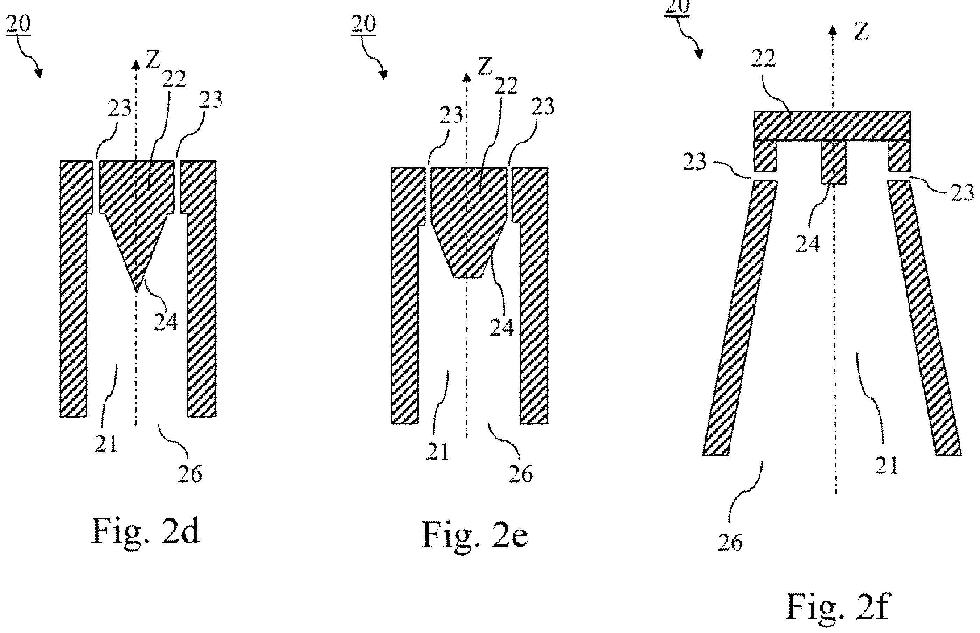

In embodiments as illustrated on Fig.2a to Fig.2e, at least a portion of the gas-receiving cavity 21 is radially delimited by a cylindrical inner wall. In other embodiments, as shown on Fig.2f, at least a portion of the gas-receiving cavity 21 is radially delimited by a conical wall. Preferably, the cylindrical or conical portion of the gas-receiving cavity is axial symmetric with respect the central axis Z.

In embodiments, the gas outlet opening 12 of the plasma chamber is circular and at least a portion of the gas-receiving cavity 21 of the effusion nozzle has a tubular shape having an inner diameter matching with a diameter of the circular gas outlet opening of the plasma chamber.

For example, in embodiments, an inner tubular portion of the gas-receiving cavity 21 can have a length along the central axis in a range between 15 to 40 mm and have an inner diameter in a range between 10 to 20 mm and wherein this inner diameter is matching with a diameter of the gas outlet opening of the plasma chamber. In other embodiments, depending on the dimensions and type of plasma reactor, the dimensions of the gas-receiving cavity can vary and be scaled up or down.

In further embodiments wherein the gas outlet opening 12 of the plasma chamber is circular, at least a portion of the gas-receiving cavity 21 of the effusion nozzle has a shape of a truncated cone wherein a diameter of a side, e.g. a top side, of the truncated cone is matching with a diameter of the gas outlet opening of the plasma chamber.

The shape of the gas-receiving cavity is however not limited to a cylindrical or conical shape. In other embodiments the gas-receiving cavity is radially delimited by a circumferential wall having any compatible shape. For example, the inner shape of the gas-receiving cavity can also have the shape of a cuboid or at least a portion of the gas-receiving cavity can have the shape of a cuboid.

In the embodiments shown on Fig.2a to Fig.2f, the axial wall 22 comprises a protruding element 24 protruding inside the gas-receiving cavity 21 in a direction parallel with the central axis Z. Due to the protruding element 24, the gas flow cannot further flow centrally along the central axis and hence the gas flow is forced to separate and flow around the protruding element. Hence the protruding element can further enhance the recirculation of the gas within the gas-receiving cavity.

In embodiments, the protruding element is rotationally symmetric with respect to the central axis Z.

This protruding element can have the shape of any of: a cone, a cylinder, a hemisphere, a cuboid, a frustum, a pyramid, a prism, a cross, a helix shape, or any combination thereof. A protruding element having a shape of a cuboid, a pyramid, a hemisphere and a frustum is respectively illustrated on Fig.2a, Fig.2b, Fig.2c and Fig.2e.

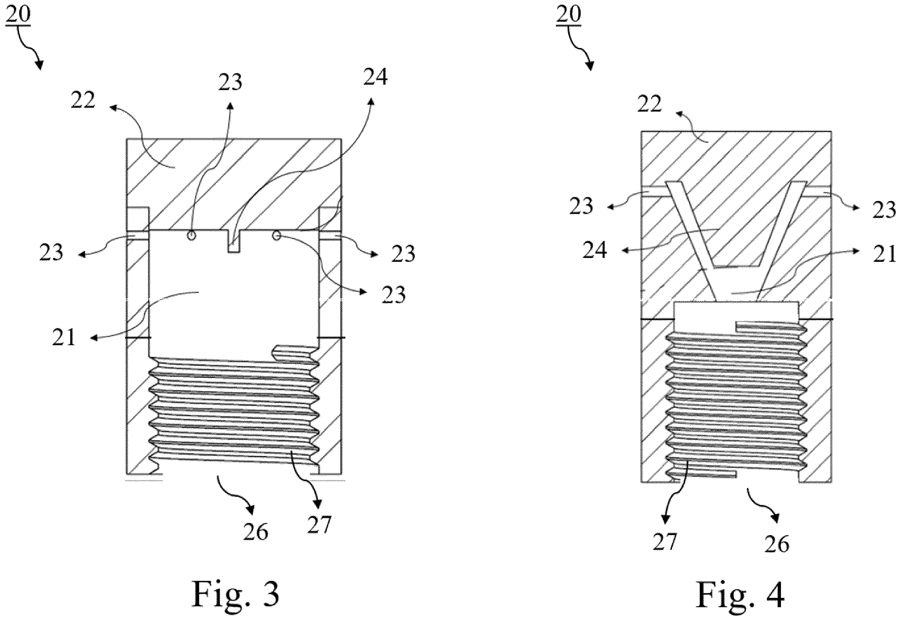

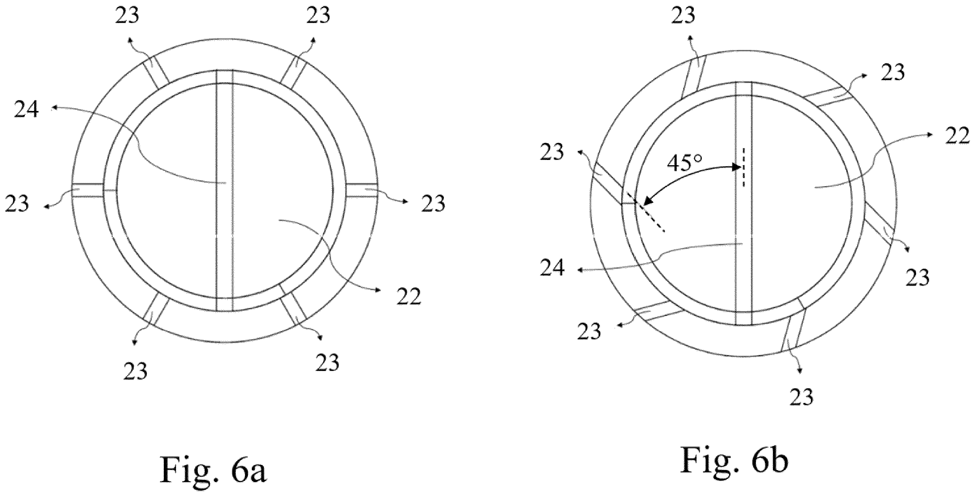

The protruding element of the embodiment shown on Fig.3 and Fig.6a has the shape of a bar, which is an example of a cuboid, and in this embodiment, the protruding element is forming a separation wall separating the end portion of the gas-receiving cavity into two halves.

In embodiments wherein, the axial wall 22 comprises a protruding element 24, the axial wall 22 is manufactured out of single piece. In other embodiments, the axial wall is made out of two parts: an axial blind flange and the protruding element. The protruding element can be mechanically attached to the axial blind flange by welding, soldering or any suitable attachment means.

As discussed above, the axial wall 22 also plays the role of electrode tip for the second electrode.

The number of effusion openings 23 in the effusion nozzle can vary from embodiment to embodiment. Typically, the effusion nozzle 20 comprises between 1 and 100 effusion openings, but the number of effusion openings can also be larger.

In embodiments wherein the effusion nozzle comprises a plurality of effusion openings, the effusion nozzle comprises 2 or more effusion openings, preferably 4 or more effusion openings or more preferably 6 or more effusion openings. Advantageously by providing multiple effusion openings, the temperature of the walls of the effusion nozzle resulting from the heat transfer of the recirculating gas, as discussed above, is more evenly distributed and hot temperature spots on for example one side or one particular area of the effusion nozzle can be avoided.

In embodiments comprising a plurality of effusion openings, the effusion openings are radially distributed. The cross-sectional view shown on Fig.6a and Fig.6b are examples of embodiments of an effusion nozzle comprising six effusion openings 23 radially distributed.

In further embodiments, the effusion openings of the effusion nozzle are randomly distributed. In other embodiments, the effusion openings are distributed within a band of a radial circumferential wall of the effusion nozzle.

In embodiments, as shown on Fig.2a, Fig.2b and Fig.6a, the effusion openings 23 are through-holes traversing through a radial circumferential wall 25 of the effusion nozzle. In these embodiments, the effusion openings are holes that have a central hole axis perpendicular to the central axis Z of the plasma reactor.

However, in other embodiments the angle between the central hole axis of the effusion hole and the central axis Z can be different from 90° and this angle can have a value in a range between 0° and 90°. For example, an effusion hole having a central hole axis at 45° with respect to the central axis Z is shown in Fig.6b.

In other embodiments, the effusion holes may be oriented tangentially with respect to the nozzle boundary.

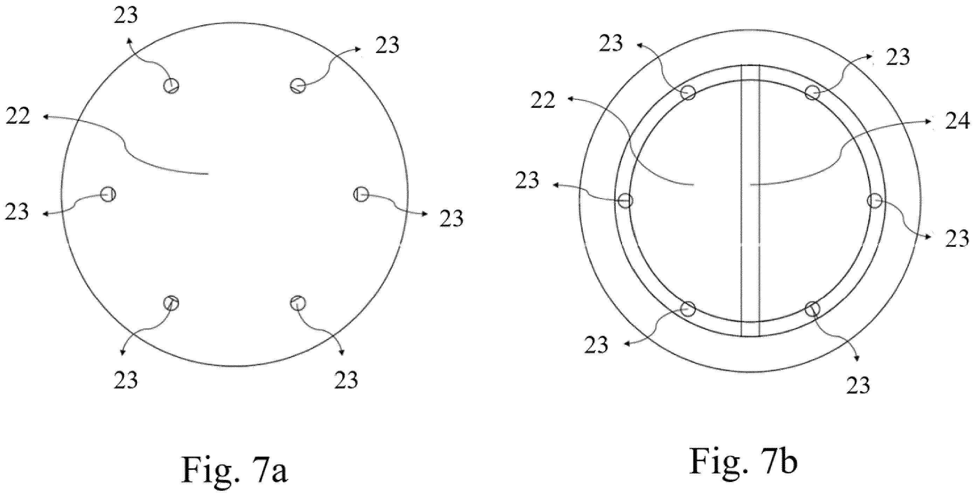

In other embodiments as illustrated in Fig.2d, Fig.2e, Fig.7a and Fig.7b, the effusion holes are axial holes made through the axial wall 22. In the example shown on Fig.7a and Fig.7b, illustrating, respectively an outer side and inner side of an axial wall 22, six axial holes are radially distributed.

The number and dimensions of the effusion openings 23 are generally defined in relation to the overall dimensions and parameters of the plasma reactor. Effusion openings can for example have a diameter between 0.1 and 10 mm. The number of openings 23 and their specific dimensions depend on the reactor dimensions, flow rate, power and type of gas used.

The effusion openings are not necessarily holes, and the holes do not necessarily have a circular opening. The opening of the hole can have any suitable shape.

In embodiments, the effusion opening is a slit, i.e., having the shape of a rectangle.

In embodiments, the effusion openings 23 are configured such that when the plasma reactor 1 is in operation an overpressure is generated inside the nozzle.

In embodiments, the effusion openings 23 are configured such that when the plasma reactor 1 is in operation, for a given constant supply rate of the feed gas: $1 \leq P1/P_{ref} \leq 5$, wherein P1 is the pressure measured inside the plasma chamber and $P_{ref}$ is a reference pressure corresponding to a pressure obtained in the plasma chamber for the same constant supply rate of feed gas but with the effusion nozzle removed from the plasma chamber. In other words, the pressure effect of using an effusion nozzle is either no effect, i.e., the same pressure is maintained or there is an overpressure created in the plasma chamber. Preferably, the pressure ratio is in the range: $1 \leq P1/P_{ref} \leq 3$. More preferably, $1 < P1/P_{ref} \leq 3$. In other words, in the latter case when $P1/P_{ref} > 1$, an overpressure is generated in the plasma chamber.

In embodiments, the effusion openings 23 are configured such that when the plasma reactor is in operation, the pressure inside the plasma chamber is between 1 mbar and 5 bar, preferably between 100 mbar and 5 bar, more preferably between 500 mbar and 2 bar.

In embodiments, the plasma chamber comprises a tubular outlet extension extending the gas outlet opening 12 of the plasma chamber along the central axis Z, and wherein the tubular outlet extension has an outer thread. In these embodiments, a circumferential inner wall portion of the gas-receiving cavity 21 of the effusion nozzle 20 comprises an inner thread 27 matching with the outer thread of the tubular outlet extension of the plasma chamber so as to form a screwed coupling between the effusion nozzle 20 and the plasma chamber 10. This allows to easily remove the effusion nozzle from the plasma chamber and to replace the effusion nozzle with another effusion nozzle.

Embodiments wherein the effusion nozzle is removeable from the plasma reactor, and hence can be replaced, has a major advantage. Indeed, the generated centralized plasma discharge is formed between the cathode knob and the blocking section of the effusion nozzle, hence, any corrosion and/or hot spot in the contact point of the plasma and the surface will occur in the body of the effusion nozzle, which is a simpler and cheaper device to be manufactured, and therefore, maximizes the service time of the reactor body.

Example of embodiments of effusion nozzles wherein a circumferential inner wall portion of the gas-receiving cavity comprises a thread 27 are shown in Fig.3 to Fig.5. The thread of the effusion nozzle is for example a female thread that matches a male thread of a tubular outlet extension of the plasma chamber.

In other embodiments, the effusion nozzle is welded to the plasma chamber.

The effusion nozzles are preferably made of a metal, e.g., stainless steel.

According to the invention, the effusion nozzle is made of an electrically conducting material and the effusion nozzle is forming part of an electrode of the plasma reactor. In other embodiments, the effusion nozzle is forming an electrode of the plasma reactor.

In embodiments, the effusion nozzle is partly made of an electrically conductive material and partly made of an electrically non-conductive material, i.e., an insulator. For example, in embodiments, the protruding element can be made of an electrically conductive material and the other parts of the effusion nozzle can be made of an electrically non-conductive material such as for example a ceramic. In these embodiments wherein the protruding element is made of an electrically conductive material, the protruding element is electrically connected with the anode.

*Gliding arc plasma reactors*

A number of different types of plasma reactors for gas-conversion that are operable with an effusion nozzle according to the present invention will be discussed in more detail.

A first type of plasma reactor comprising an effusion nozzle is a gliding arc, GA, plasma reactor. The GA discharge is a transient type of arc discharge.

What these GA plasma reactors have in common is that they comprise a first electrode, a second electrode electrically insulated of the first electrode, and a power supply configured for maintaining a high-voltage between the first and second electrode. The high-voltage is typically in the kV range.

Examples of a 3D GA discharge plasma reactor are a 3D gliding arc plasmatron, GAP, and a rotating gliding arc, RGA, reactor. Both types of reactors operate between cylindrical electrodes.

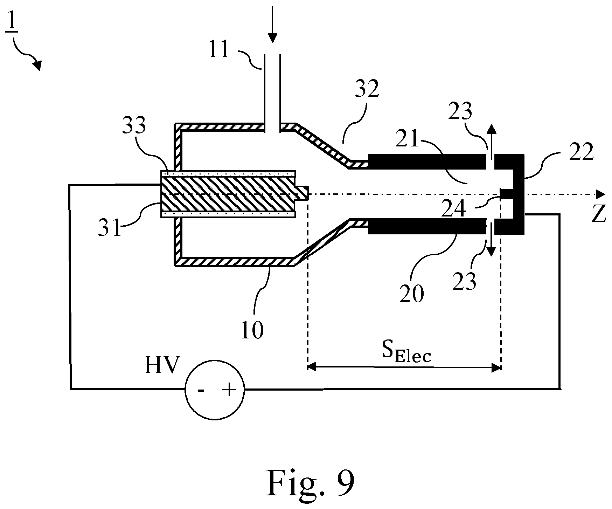

With reference to Fig.8 and Fig.9, a cross-section of two examples of a 3D RGA reactor comprising an effusion nozzle 20 are schematically shown. The RGA reactor comprises a plasma chamber 10 and one or more gas inlets 11 for supplying the feed gas into the plasma chamber. Generally, the feed gas is supplied in the plasma chamber as a swirling flow around the central axis Z. The RGA reactor further comprises a pair of electrodes wherein a first electrode 31 is a high-voltage cathode and a second electrode 32 is a grounded anode. In this embodiment, the first electrode has shape of a pin elongating along the central axis Z, the high-voltage is for example provided in the form of a high-voltage spark plug.

In embodiments, the second electrode (or anode) of a 3D RGA is at least partly formed by a first wall portion of the plasma chamber. Through this first wall portion, a wall opening is made forming the gas outlet opening 12 of the plasma chamber 10.

In embodiments, the first wall portion of the plasma chamber that at least partly is forming the second electrode is a conical portion having a shape of a truncated hollow cone elongating along the central axis Z.

The effusion nozzle 20 is made of an electrically conducting material and the effusion nozzle is electrically coupled to the second electrode so as to form an extension of the second electrode 32.

For example, in the embodiments shown on Fig.8 and Fig.9, the anode 32 is formed by multiple wall portions of the plasma chamber 10. In this example the plasma chamber 10 is made of a metal and comprises a first cylindrical first section 10a followed by a second conical section 10b and finally followed by a tubular section 10c. The feed gas, e.g., $N_2$ and $O_2$, is introduced in the first cylindrical section 10a of the plasma chamber 10 as a swirling gas flow with respect to the central axis Z.

In the embodiment shown on Fig.8 and Fig.9, the effusion nozzle 20, colored in black, is attached to the tubular section 10c of the plasma chamber. As illustrated on Fig.8, the tubular section 10c is a tubular outlet extension extending the outlet opening 12 of the plasma chamber along the central axis Z. The effusion nozzle is also made of an electrically conducting material such as for example stainless steel. Hence, in this embodiment, the effusion nozzle, together with the first 10a, second 10b and third section 10c of the plasma chamber are forming the anode 32. The anode is generally grounded.

As with the 2D GA reactor, also with the 3D GA reactor, by applying a high-voltage between the first 31 and second electrode 32, a gliding arc discharge is generated in the plasma chamber. Typically, when applying a voltage of about 3 kV between the first and second electrode, an arc is created in the shortest gap between cathode and anode. In an RGA plasma reactor, the arc immediately starts gliding along the reactor body due to the swirling gas flow inside the plasma chamber. During gliding, one side of the arc remains attached to the top face of the cathode, while the other side glides around the surface of the reactor body, which results in an arc elongation. While the arc is gliding, it also rotates around the internal surface of the anode. When powered by a current source, the elongation of the arc is represented by a nearly linear increase in the discharge voltage. The discharge current decreases due to the rising arc length, and thus rising arc resistance. During arc elongation, energy is dissipated into heat and radiation. Therefore, if the supplied power is not sufficient to sustain further arc extension, the arc will extinguish, which is presented by a sudden drop of the discharge current, and a reciprocal jump in the electrode voltage. As a result, re-ignition will take place in the shortest gap between both electrodes. This is the common iterative operating mode of the reactor.

In embodiments, the plasma reactor is a rotating gliding arc plasma reactor operable both in a rotating arc mode, as discussed above, and operable in a steady arc mode. A rotating arc mode is a mode wherein the arc rotates along the anode, while in the steady arc mode, the arc is more fixed and has a constant length. These two modes of operation are for example discussed by Jardali et al.

Indeed, with an RGA reactor, if certain conditions are met, the arc can stabilize due to the intense heat transfer to the walls of the plasma chamber. In this so-called steady arc regime, the supplied power is high enough for the arc to elongate through the third section 10c of the plasma chamber and reach the entrance opening of the effusion nozzle 20. At this high power level, the arc does not extinguish, and remains relatively stable in the centre of the plasma chamber with a constant arc length. This steady state arc regime is reflected by the relatively constant values for discharge voltage and current. When in the steady arc regime, the effusion nozzle further allows the plasma to elongate until it reaches the axial wall 22 or more precisely the protruding element 24 of the wall 22.

For an RGA reactor operating in the steady arc regime, for a given gas flow rate of introducing the feed gas into the plasma chamber and for a given power supplied by the power supply, the electrode separation distance $S_{Elec}$ measured along the central axis Z between a tip of the first electrode 31 and the axial wall or a central portion of the axial wall that is forming an electrode tip for the second electrode is defined such that, when in operation, the steady arc discharge is anchored between the tip of the first electrode 31 and the tip of the second electrode 32. In this way, the plasma is extending through the effusion nozzle up to the axial wall. Such a plasma extension increases the production yield of the gas conversion.

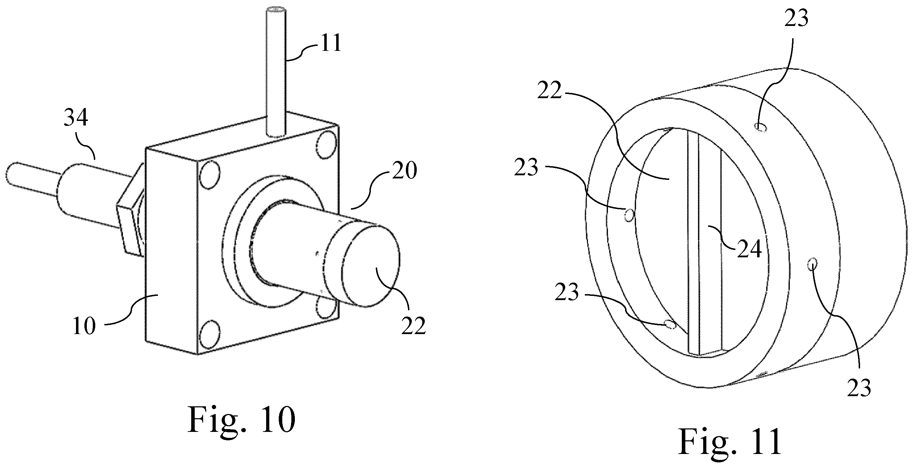

With reference to Fig.10, an isometric view is shown of an exemplary embodiment of an RGA plasma reactor. The cuboid shaped element is the reactor outer body forming a supporting structure. In this embodiment, the effusion nozzle is cylindrically shaped. Further, a spark plug 34 is used wherein an end part of the spark plug is forming the cathode pin-electrode. Fig.11 illustrates part of the inside of the effusion nozzle of Fig.10, namely the gas-receiving cavity ending with an axial wall 22 comprising a protruding element 24. In this example, the protruding element 24 has a shape of a cuboid, more specifically a shape of a bar, and divides an end portion of gas-receiving cavity into two halves.

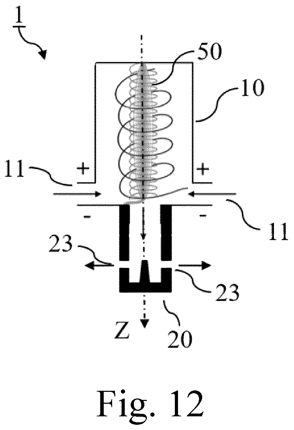

Another example of a 3D gliding arc reactor is a gliding arc plasmatron. An example of an embodiment of a GAP reactor is schematically illustrated in Fig.12. The cylindrical reactor body forming the reaction chamber 10 operates as a cathode, i.e., a powered electrode, while the reactor outlet acts as an anode and is grounded. The gas enters tangentially between both cylindrical electrodes via gas inlets 11. The spiral shown inside the plasma chamber in Fig.12, illustrates a spiralling or vortex gas flow. When the outlet diameter of the plasma chamber is significantly smaller than the inner diameter of the plasma chamber, the gas flows in an outer vortex towards the upper part of the plasma chamber, and subsequently it will flow back in a reverse inner vortex with smaller diameter, because it has lost some speed, and thus it can leave the reactor through the gas outlet opening of the plasma chamber to finally reach the gas-receiving cavity of the effusion nozzle 20. The converted and unconverted feed gas leaves the gas-receiving cavity through the effusion openings, in this example radial effusion openings 23.

As is the case with the RGA, also with the GAP reactor, following extinction of the arc, the arc is again initiated at the shortest interelectrode distance, and expands till the upper part of the plasma chamber, rotating around the central axis Z of the reactor until it more or less stabilizes in the center after about 1 ms. In the ideal scenario, the inner gas vortex passes through this stabilized arc, allowing a larger fraction of the gas being converted than in a classical two-dimensional GA discharge.

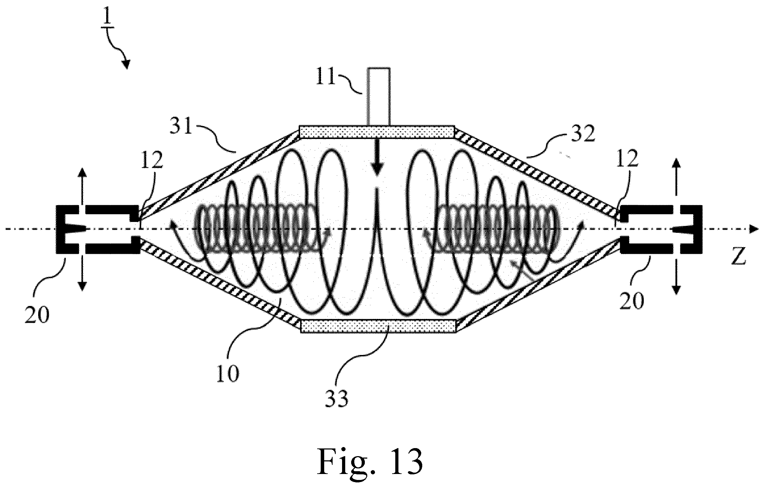

A further example of a 3D GA plasma reactor is a so-called dual vortex plasmatron, DVP, as schematically illustrated on Fig.13. It presents an innovative electrode design, to improve the conversion capability of the GAP reactor, by elongating the arc in two directions, to increase the residence time of the gas inside the arc, and to actively cool the cathode spot by rotation of the arc and gas convection. This DVP yields a strong rotational gas flow, up to the electrode outlets, which allows rotating the cathode or anode hot spots, hence reducing electrode damage. As the plasma chamber 10 of this embodiment comprises two gas outlet openings 12, two effusion nozzles 20 are coupled to the plasma chamber, one to each gas outlet opening 12. In this embodiment, the first 31 and second 32 electrode are wall portions of the plasma chamber that are electrically separated by an electrical insulator 33.

*Atmospheric pressure glow discharge reactors*

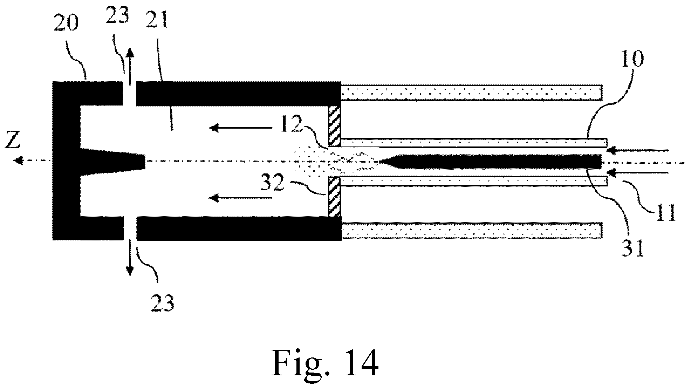

Another type of plasma reactors that comprise an effusion nozzle are so-called atmospheric pressure glow discharges, APGD, reactors. A basic APGD reactor is schematically illustrated in Fig.14. The reactor comprises a pin-type cathode 31 extending along the central axis Z and an axial plate having a hole is forming the anode 32. A quartz tube is forming the plasma chamber 10. The converted and unconverted gas flows out of the plasma chamber 10 into the gas-receiving cavity 21 of the effusion nozzle 20. The converted and unconverted feed gas finally leaves the plasma reactor through the effusion openings 23 in the effusion nozzle.

In embodiments, the APGD reactor additionally uses a vortex flow generator. Such a vortex flow effectively lowers the cathode temperature due to turbulence, and thus enables operation at higher power with longer interelectrode distance. In addition, the turbulence allows somewhat more gas to pass through the plasma.

In embodiments, to further enhance the gas fraction passing through the plasma, APGD reactors make use of a ceramic tube with a smaller inner radius of 2.5 mm that fits within a few mm around the cathode pin. In these embodiments, a spiral groove is carved on the pin, guiding the gas into the tube, and acting as effective cooling for the cathode pin, preventing it from melting, and thus also enabling the use of higher power. The plasma region is indeed limited to a radius of 2.5 mm or less, as predicted by modelling, so this ceramic tube with small inner radius makes sure that the plasma fills the entire reactor, and all the gas passes through the active plasma, yielding improved gas conversion.

## Method for operating the plasma reactor with effusion nozzle

A method for operating a plasma reactor that comprises an effusion nozzle as discussed above is provided. The method comprises steps of: supplying a feed gas into the plasma chamber, using a power supply for generating a high-voltage between the first and the second electrode, supplying power with the power supply so as to generate an arc discharge between the first electrode and the second electrode and thereby initiate a gas discharge plasma in the plasma chamber, increasing the supplied power so as to extend the arc discharge through the effusion nozzle until a central steady arc discharge is anchored between the first electrode and the axial wall of the effusion nozzle, extracting converted and unconverted feed gas through the effusion openings.

For embodiments wherein the axial wall 22 of the effusion nozzle 20 comprises a protruding element 24 protruding inside the gas-receiving cavity 21 in a direction parallel with the central axis Z, the central steady arc discharge is preferably anchored between the first electrode and the protruding element.

With the present method of operating the plasma reactor having an effusion nozzle, the performances of plasma-based gas conversion are increased, as will be further outlined below.

## Performance of plasma reactor with effusion nozzle

The present invention is, at least in part, based on the inventor's observation and insight that an effusion nozzle as specified above, can improve the performances of a plasma reactor for plasma-based gas conversion. More precisely, that the effusion nozzle can increase the production yield of gas conversion and/or reduce the energy cost when compared to prior art plasma reactors not comprising an effusion nozzle.

Tests have been performed to demonstrate improved performances of conversion of $N_2$ and $O_2$ molecules into NO and $NO_2$ molecules. The tests were performed with the rotating gliding arc plasma reactor illustrated on Fig.10 and Fig.11. The RGA plasma reactor was operated in the steady arc regime discussed above.

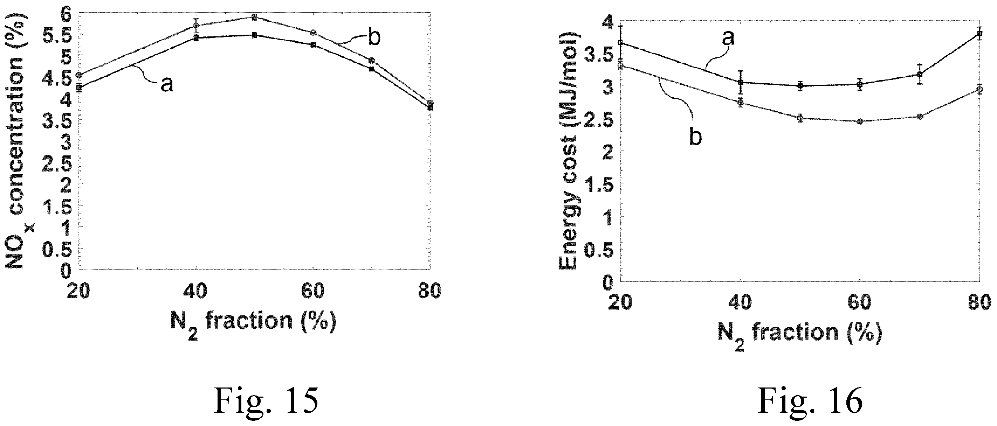

The tests were performed in a wide range of $N_2/O_2$ gas feed ratios supplied to the RGA plasma reactor, with and without the effusion nozzle. Figure 15 shows the measured $NO_x$ concentrations expressed as volume percent, as function of the $N_2$ fraction. Curve "a" is for a measurement without effusion nozzle and curve "b" is for a measurement with effusion nozzle. In Fig.16, the corresponding energy cost, expressed as MJ per mol, is plotted as function of the $N_2$ fraction. The definition of the energy cost, which is expressing an energy consumption, can be found in Jardali et al..

According to the results, improved $NO_x$ concentrations are obtained, as shown on Fig.15, and the energy cost is clearly reduced when using a plasma reactor with an effusion nozzle according to the present invention.

Further tests have been performed to measure the temperature of the effusion nozzle during operation of the RGA plasma reactor. Results show that the end portion of the effusion nozzle, i.e., the axial wall, heats up to temperatures of 500°C and above. These high temperatures improve the thermal conversion and therefore higher production yields can be obtained at lower input power.

The improved results obtained with a plasma reactor comprising an effusion nozzle according to the present invention can be explained by what is generally named "fast cooling". This fast cooling is achieved as follows. Firstly, the plasma reactor generates a stable/steady plasma discharge and the effusion nozzle elongates the formed plasma discharge which further increases the plasma volume and maximizes the thermal effect. Secondly, in addition to forcing the flow to circulate in the gas receiving cavity of the nozzle by using an axial end wall, the axial wall of the effusion nozzle also acts as an efficient heat sink to cool down the gas from high temperatures of ~4000K within the bulk plasma to ~1000K at the outlet of the nozzle. This results in taking advantage of thermal effects, and simultaneously, benefiting from efficient cooling immediately outside the nozzle, which limits the occurrence of the recombination reactions, and thus increases the overall performance.

In embodiments wherein small effusion openings in the effusion nozzle are used, some overpressure inside the nozzle can be caused, which additionally improves performance.

A plasma reactor as described above comprises an effusion nozzle for conversion of $N_2$ and $O_2$ molecules into NO and $NO_2$ molecules. In embodiments, an RGA plasma reactor is used for this conversion of $N_2$ and $O_2$ molecules.

Further embodiments, provide for using a plasma reactor as described above that comprises an effusion nozzle for conversion of $CO_2$ molecules into value added chemicals, or renewable fuels. In embodiments, an RGA plasma reactor is used for this conversion of $CO_2$ molecules.

### Reference numbers

| 1 | Plasma reactor |
|---|---|
| 10 | Plasma chamber |
| 11 | Gas inlet |
| 12 | Gas outlet opening |

(continued)

| | |
|---|---|
| 20 | Effusion nozzle |
| 21 | Gas-receiving cavity |
| 22 | Axial wall |
| 23 | Effusion opening |
| 24 | Protruding element |
| 25 | Radial circumferential wall |
| 26 | Axial entrance opening |
| 27 | Thread |
| 31 | First electrode |
| 31a | Electrode tip of first electrode |
| 32 | Second electrode |
| 32a | Electrode tip of second electrode |
| 33 | Electrical insulator |
| 34 | Spark plug |
| 35 | First part of second electrode |
| 40 | Waveguide |
| 50 | Plasma |

**Claims**

1. A plasma reactor (1) for plasma-based gas conversion comprising:

   • a plasma chamber (10) having one or more gas inlets (11) configured for introducing a feed gas into the plasma chamber (10), and at least one gas outlet opening (12) for evacuating converted and unconverted feed gas from the plasma chamber (10),
   • a central axis (Z) passing through said at least one gas outlet opening (12),
   • a first electrode (31) and a second electrode (32) for generating a gas discharge plasma in the plasma chamber,
   wherein the plasma reactor (1) comprises

   • an effusion nozzle (20) made, of or at least partly made, of an electrically conducting material and coupled to the plasma chamber (10), and wherein said effusion nozzle (20) comprises:

   - a radial circumferential wall (25) radially delimiting a gas-receiving cavity (21) elongating along said central axis (Z) from a first end to a second end,
   - an axial entrance opening (26) at the first end of the gas-receiving cavity (21) for receiving converted and unconverted feed gas exiting said at least one gas outlet opening (12) of the plasma chamber,
   - an axial wall (22) axially delimiting the gas-receiving cavity at the second end of the gas-receiving cavity,
   - one or more effusion openings (23) configured for evacuating converted and unconverted feed gas from the gas-receiving cavity (21),

   wherein the effusion nozzle (20) is forming an extension of the second electrode (32) or alternatively, the effusion nozzle (20) or at least part of the effusion nozzle is forming the second electrode (32); and
   **characterized in that** said axial wall (22) or at least a central portion of said axial wall (22) is forming an electrode tip (32a) of said second electrode (32).

2. The plasma reactor according to claim 1, wherein the axial wall (22) comprises a protruding element (24) protruding inside the gas-receiving cavity (21).

3. The plasma reactor according to claim 2, wherein said protruding element (24) has the shape of any of: a cone, a cylinder, a hemisphere, a cuboid, a frustum, a pyramid, a prism, a cross, a helix shape, or any combination thereof.

4. The plasma reactor according to claim 2 or claim 3, wherein said protruding element (24) is forming an electrode tip (32a) for the second electrode (32).

5. The plasma reactor according to any of previous claims, wherein said effusion openings (23) are through-holes traversing said radial circumferential wall (25) and/or through-holes traversing said axial wall (22).

6. The plasma reactor according to any of previous claims, wherein the effusion nozzle comprises 2 or more effusion openings.

7. The plasma reactor according to any of previous claims, wherein said effusion nozzle (20) is removably coupled to the plasma chamber (10).

8. The plasma reactor according to any of previous claims, wherein the plasma chamber (10) comprises a tubular outlet extension (10c) extending the at least one gas outlet opening (12) along said central axis (Z), and wherein said tubular outlet extension has an outer thread and wherein a circumferential inner wall portion of the gas-receiving cavity (21) of the effusion nozzle (20) comprises an inner thread matching with the outer thread of said tubular outlet extension (10c) so as to form a screwed coupling between the effusion nozzle (20) and the plasma chamber (10).

9. The plasma reactor of any of previous claims, wherein said one or more effusion openings (23) are configured such that when the plasma reactor (1) is in operation, for a given constant supply rate of the feed gas:

$$1 \leq P1/P_{ref} \leq 5$$

wherein P1 is the pressure inside the plasma chamber and $P_{ref}$ is a reference pressure corresponding to a pressure obtained in the plasma chamber for the same constant supply rate of feed gas but with the effusion nozzle removed from the plasma reactor.

10. The plasma reactor according to any of previous claims, wherein said gas outlet opening (12) of the plasma chamber is circular and wherein at least a portion of the gas-receiving cavity (21) of the effusion nozzle has a tubular shape having an inner diameter matching with a diameter of the gas outlet opening of the plasma chamber.

11. The plasma reactor according to any of claims 1 to 9, wherein said gas outlet opening (12) of the plasma chamber is circular and wherein at least a portion of the gas-receiving cavity (21) of the effusion nozzle has a shape of a truncated cone wherein a diameter of a side of the truncated cone is matching with a diameter of the gas outlet opening of the plasma chamber.

12. The plasma reactor according to any of previous claims, wherein said first electrode (31) has a shape of a pin elongating along the central axis (Z).

13. The plasma reactor according to any of previous claims, wherein the second electrode (32) comprises a first electrode part (35) and a second electrode part electrically coupled to the first electrode part (35), and wherein the second electrode part is formed by the effusion nozzle (20), and wherein the first electrode part (35) is formed or at least partly formed by a wall portion of the plasma chamber (10), and wherein a wall opening made through said wall portion of the plasma chamber is forming said gas outlet opening (12) of the plasma chamber (10).

14. The plasma reactor according to claim 13, wherein said wall portion of the plasma chamber that at least partly is forming the first electrode part (35) of the second electrode (32) is a conical portion having a shape of a truncated hollow cone elongating along the central axis Z.

15. The plasma reactor according to claim 14, wherein said wall portion of the plasma chamber that at least partly is forming the first electrode part (35) of the second electrode (32) has a conical shape.

**Patentansprüche**

1. Plasmareaktor (1) zur plasmagestützten Gasumwandlung, umfassend:

   • eine Plasmakammer (10) mit einem oder mehreren Gaseinlässen (11), die zum Einleiten eines Speisegases in die Plasmakammer (10) ausgebildet sind, und mindestens einer Gasauslassöffnung (12) zum Abführen von umgewandeltem und nicht umgewandeltem Speisegas aus der Plasmakammer (10),
   • eine Mittelachse (Z), die durch die mindestens eine Gasauslassöffnung (12) verläuft,
   • eine erste Elektrode (31) und eine zweite Elektrode (32) zum Erzeugen eines Gasentladungsplasmas in der Plasmakammer,
   wobei der Plasmareaktor (1) umfasst

      • eine Effusionsdüse (20), die aus einem elektrisch leitenden Material besteht oder mindestens teilweise daraus besteht und mit der Plasmakammer (10) gekoppelt ist, und wobei die Effusionsdüse (20) umfasst:

         - eine radial umlaufende Wand (25), die radial einen Gasaufnahmeraum (21) begrenzt, der sich entlang dieser Mittelachse (Z) von einem ersten Ende zu einem zweiten Ende erstreckt,
         - eine axiale Einlassöffnung (26) am ersten Ende des Gasaufnahmeraums (21) zum Aufnehmen von umgewandeltem und nicht umgewandeltem Speisegas, das aus der mindestens einen Gasauslassöffnung (12) der Plasmakammer austritt,
         - eine axiale Wand (22), die den Gasaufnahmeraum am zweiten Ende des Gasaufnahmeraums axial begrenzt,
         - eine oder mehrere Effusionsöffnungen (23), die zum Abführen von umgewandeltem und nicht umgewandeltem Speisegas aus dem Gasaufnahmeraum (21) ausgebildet sind,

      wobei die Effusionsdüse (20) eine Verlängerung der zweiten Elektrode (32) bildet oder alternativ die Effusionsdüse (20) oder mindestens ein Teil der Effusionsdüse die zweite Elektrode (32) bildet; und **dadurch gekennzeichnet, dass** die axiale Wand (22) oder mindestens ein mittlerer Abschnitt der axialen Wand (22) eine Elektrodenspitze (32a) der zweiten Elektrode (32) bildet.

2.  Plasmareaktor nach Anspruch 1, wobei die axiale Wand (22) ein vorstehendes Element (24) aufweist, das in den Gasaufnahmeraum (21) vorsteht.

3.  Plasmareaktor nach Anspruch 2, wobei das vorstehende Element (24) die Form eine der folgenden Formen aufweist: eines Kegels, eines Zylinders, einer Halbkugel, eines Quaders, eines Kegelstumpfs, einer Pyramide, eines Prismas, eines Kreuzes, einer Helixform oder einer beliebigen Kombination davon.

4.  Plasmareaktor nach Anspruch 2 oder Anspruch 3, wobei das vorstehende Element (24) eine Elektrodenspitze (32a) für die zweite Elektrode (32) bildet.

5.  Plasmareaktor nach einem der vorhergehenden Ansprüche, wobei die Effusionsöffnungen (23) Durchgangsbohrungen sind, die durch die radial umlaufende Wand (25) hindurchgehen und/oder Durchgangsbohrungen, die durch die axiale Wand (22) hindurchgehen.

6.  Plasmareaktor nach einem der vorhergehenden Ansprüche, wobei die Effusionsdüse zwei oder mehr Effusionsöffnungen umfasst.

7.  Plasmareaktor nach einem der vorhergehenden Ansprüche, wobei die Effusionsdüse (20) lösbar mit der Plasmakammer (10) gekoppelt ist.

8.  Plasmareaktor nach einem der vorhergehenden Ansprüche, wobei die Plasmakammer (10) eine rohrförmige Auslassverlängerung (10c) aufweist, die die mindestens eine Gasauslassöffnung (12) entlang der Mittelachse (Z) verlängert, und wobei die rohrförmige Auslassverlängerung ein Außengewinde aufweist und wobei ein umlaufender Innenwandabschnitt des Gasaufnahmeraums (21) der Effusionsdüse (20) ein Innengewinde aufweist, das mit dem Außengewinde der rohrförmigen Auslassverlängerung (10c) zusammenpasst, um eine Schraubverbindung zwischen der Effusionsdüse (20) und der Plasmakammer (10) zu bilden.

9.  Plasmareaktor nach einem der vorhergehenden Ansprüche, wobei die eine oder mehreren Effusionsöffnungen (23) so konfiguriert sind, dass bei Betrieb des Plasmareaktors (1) für eine gegebene konstante Zufuhrrate des Speisegases gilt:

$$1 \leq P1/P_{ref} \leq 5$$

wobei P1 der Druck im Inneren der Plasmakammer ist und $P_{ref}$ ein Referenzdruck ist, der einem Druck entspricht, der in der Plasmakammer bei derselben konstanten Zufuhrrate des Speisegases, jedoch mit aus dem Plasmareaktor entfernter Effusionsdüse, erhalten wird.

10. Plasmareaktor nach einem der vorhergehenden Ansprüche, wobei die Gasauslassöffnung (12) der Plasmakammer kreisförmig ist und wobei mindestens ein Teil des Gasaufnahmeraums (21) der Effusionsdüse eine röhrenförmige Form aufweist, deren Innendurchmesser mit dem Durchmesser der Gasauslassöffnung der Plasmakammer übereinstimmt.

11. Plasmareaktor nach einem der Ansprüche 1 bis 9, wobei die Gasauslassöffnung (12) der Plasmakammer kreisförmig ist und wobei mindestens ein Teil des Gasaufnahmeraums (21) der Effusionsdüse die Form eines Kegelstumpfs aufweist, wobei der Durchmesser einer Seite des Kegelstumpfs mit dem Durchmesser der Gasauslassöffnung der Plasmakammer übereinstimmt.

12. Plasmareaktor nach einem der vorhergehenden Ansprüche, wobei die erste Elektrode (31) die Form eines Stifts aufweist, der sich entlang der Mittelachse (Z) erstreckt.

13. Plasmareaktor nach einem der vorhergehenden Ansprüche, wobei die zweite Elektrode (32) einen ersten Elektrodenteil (35) und einen zweiten Elektrodenteil umfasst, der elektrisch mit dem ersten Elektrodenteil (35) gekoppelt ist, und wobei der zweite Elektrodenteil durch die Effusionsdüse (20) gebildet wird, und wobei der erste Elektrodenabschnitt (35) durch einen Wandabschnitt der Plasmakammer (10) gebildet oder mindestens teilweise gebildet wird, und wobei eine Wandöffnung, die durch diesen Wandabschnitt der Plasmakammer geführt wird, die Gasauslassöffnung (12) der Plasmakammer (10) bildet.

14. Plasmareaktor nach Anspruch 13, wobei der Wandabschnitt der Plasmakammer, der mindestens teilweise den ersten Elektrodenabschnitt (35) der zweiten Elektrode (32) bildet, ein konischer Abschnitt ist, der die Form eines abgestumpften Hohlkegels aufweist, der sich entlang der Mittelachse Z erstreckt.

15. Plasmareaktor nach Anspruch 14, wobei der Wandabschnitt der Plasmakammer, der mindestens teilweise den ersten Elektrodenabschnitt (35) der zweiten Elektrode (32) bildet, eine konische Form aufweist.

## Revendications

1. Réacteur à plasma (1) pour la conversion de gaz à base de plasma comprenant :

   • une chambre à plasma (10) ayant une ou plusieurs entrées de gaz (11) configurées pour introduire un gaz d'alimentation dans la chambre à plasma (10), et au moins une ouverture de sortie de gaz (12) pour évacuer le gaz d'alimentation converti et non converti depuis la chambre à plasma (10),
   • un axe central (Z) passant à travers ladite au moins une ouverture de sortie de gaz (12),
   • une première électrode (31) et une seconde électrode (32) pour générer un plasma de décharge gazeuse dans la chambre à plasma, dans lequel le réacteur à plasma (1) comprend

   • une buse d'effusion (20) fabriquée, ou au moins partiellement fabriquée, d'un matériau électriquement conducteur et couplée à la chambre à plasma (10), et dans lequel ladite buse d'effusion (20) comprend :

   - une paroi circonférentielle radiale (25) délimitant de façon radiale une cavité de réception de gaz (21) s'étendant le long dudit axe central (Z) depuis une première extrémité jusqu'à une seconde extrémité,
   - une ouverture d'entrée axiale (26) au niveau de la première extrémité de la cavité de réception de gaz (21) pour recevoir le gaz d'alimentation converti et non converti sortant de ladite au moins une ouverture de sortie de gaz (12) de la chambre à plasma,
   - une paroi axiale (22) délimitant de façon axiale la cavité de réception de gaz au niveau de la seconde extrémité de la cavité de réception de gaz,
   - une ou plusieurs ouvertures d'effusion (23) configurées pour évacuer le gaz d'alimentation converti et non converti depuis la cavité de réception de gaz (21),

   dans lequel la buse d'effusion (20) forme une extension de la seconde électrode (32) ou comme variante, la buse d'effusion (20) ou au moins une partie de la buse d'effusion forme la seconde électrode (32) ; et **caractérisé en ce que** ladite paroi axiale (22) ou au moins une portion centrale de ladite paroi axiale (22) forme une pointe d'électrode (32a) de ladite seconde électrode (32).

2. Réacteur à plasma selon la revendication 1, dans lequel la paroi axiale (22) comprend un élément en saillie (24) faisant saillie à l'intérieur de la cavité de réception de gaz (21).

3. Réacteur à plasma selon la revendication 2, dans lequel ledit élément en saillie (24) a la forme de l'un quelconque parmi : un cône, un cylindre, un hémisphère, un cuboïde, un tronc, une pyramide, un prisme, une croix, une forme hélicoïdale, ou toute combinaison de ceux-ci.

4. Réacteur à plasma selon la revendication 2 ou la revendication 3, dans lequel ledit élément en saillie (24) forme une pointe d'électrode (32a) pour la seconde électrode (32).

5. Réacteur à plasma selon l'une quelconque des revendications précédentes, dans lequel lesdites ouvertures d'effusion (23) sont des trous traversants traversant ladite paroi circonférentielle radiale (25) et/ou des trous traversants traversant ladite paroi axiale (22).

6. Réacteur à plasma selon l'une quelconque des revendications précédentes, dans lequel la buse d'effusion comprend 2 ouvertures d'effusion ou plus.

7. Réacteur à plasma selon l'une quelconque des revendications précédentes, dans lequel ladite buse d'effusion (20) est couplée de manière amovible à la chambre à plasma (10).

8. Réacteur à plasma selon l'une quelconque des revendications précédentes, dans lequel la chambre à plasma (10) comprend une extension de sortie tubulaire (10c) prolongeant l'au moins une ouverture de sortie de gaz (12) le long dudit axe central (Z), et dans lequel ladite extension de sortie tubulaire a un filetage extérieur et dans lequel une portion de paroi intérieure circonférentielle de la cavité de réception de gaz (21) de la buse d'effusion (20) comprend un filetage intérieur correspondant au filetage extérieur de ladite extension de sortie tubulaire (10c) de manière à former un couplage vissé entre la buse d'effusion (20) et la chambre à plasma (10).

9. Réacteur à plasma selon l'une quelconque des revendications précédentes, dans lequel lesdites une ou plusieurs ouvertures d'effusion (23) sont configurées de telle sorte que lorsque le réacteur à plasma (1) est en fonctionnement, pour un débit d'alimentation constant donné du gaz d'alimentation :

$$1 \leq P1/P_{ref} \leq 5$$

dans lequel P1 est la pression à l'intérieur de la chambre à plasma et $P_{ref}$ est une pression de référence correspondant à une pression obtenue dans la chambre à plasma pour le même débit d'alimentation constant de gaz d'alimentation mais avec la buse d'effusion retirée du réacteur à plasma.

10. Réacteur à plasma selon l'une quelconque des revendications précédentes, dans lequel ladite ouverture de sortie de gaz (12) de la chambre à plasma est circulaire et dans lequel au moins une portion de la cavité de réception de gaz (21) de la buse d'effusion a une forme tubulaire ayant un diamètre intérieur correspondant à un diamètre de l'ouverture de sortie de gaz de la chambre à plasma.

11. Réacteur à plasma selon l'une quelconque des revendications 1 à 9, dans lequel ladite ouverture de sortie de gaz (12) de la chambre à plasma est circulaire et dans lequel au moins une portion de la cavité de réception de gaz (21) de la buse d'effusion a une forme de cône tronqué dans lequel un diamètre d'un côté du cône tronqué correspond à un diamètre de l'ouverture de sortie de gaz de la chambre à plasma.

12. Réacteur à plasma selon l'une quelconque des revendications précédentes, dans lequel ladite première électrode (31) a une forme de broche s'étendant le long de l'axe central (Z).

13. Réacteur à plasma selon l'une quelconque des revendications précédentes, dans lequel la seconde électrode (32) comprend une première partie d'électrode (35) et une seconde partie d'électrode électriquement couplée à la première partie d'électrode (35), et dans lequel la seconde partie d'électrode est formée par la buse d'effusion (20),
et dans lequel la première partie d'électrode (35) est formée ou au moins partiellement formée par une portion de paroi de la chambre à plasma (10), et dans lequel une ouverture de paroi pratiquée à travers ladite portion de paroi de la chambre à plasma forme ladite ouverture de sortie de gaz (12) de la chambre à plasma (10).

14. Réacteur à plasma selon la revendication 13, dans lequel ladite portion de paroi de la chambre à plasma qui forme au moins partiellement la première partie d'électrode (35) de la seconde électrode (32) est une portion conique ayant une forme de cône creux tronqué s'étendant le long de l'axe central Z.

15. Réacteur à plasma selon la revendication 14, dans lequel ladite portion de paroi de la chambre à plasma qui forme au moins partiellement la première partie d'électrode (35) de la seconde électrode (32) a une forme conique.

Fig. 1a

Fig. 1b

Fig. 1c

Fig. 2a   Fig. 2b   Fig. 2c

Fig. 2d

Fig. 2e

Fig. 2f

EP 4 334 247 B1

Fig. 3

Fig. 4

EP 4 334 247 B1

EP 4 334 247 B1

Fig. 5

Fig. 6b

Fig. 6a

24

Fig. 7b

Fig. 7a

Fig. 8

Fig. 9

EP 4 334 247 B1

Fig. 11

Fig. 10

Fig. 12

Fig. 13

EP 4 334 247 B1

Fig. 14

Fig. 15

Fig. 16

EP 4 334 247 B1

**EP 4 334 247 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004168905 A1
- US 3042830 A

- WO 2020115473 A1

**Non-patent literature cited in the description**

- **JARDALI et al.** *Green Chem*, 2021, vol. 23, 1748-1757

- **BOGAERTS** ; **CENTI**. Plasma technology for CO2 conversion: A personal perspective on prospects and gaps. *Front. Energy Res.*, 2020, vol. 8, 111